# EUROPEAN PATENT SPECIFICATION

(11) **EP 2 154 847 B1**
(45) Date of publication and mention of the grant of the patent: **02.10.2013**
(21) Application number: 08162369.6
(22) Date of filing: 14.08.2008
(51) Int. Cl.: H04L 25/02, H04L 5/00, H04L 27/26

(54) **New frame and signalling pattern structure for multi-carrier systems**
Neue Rahmen- und Signalisierungsmusterstruktur für Mehrträgersysteme
Nouveau cadre et structure de signalisation de formation pour systèmes à multiporteuses

(43) Date of publication of application: 17.02.2010
(73) Proprietor: Sony Corporation, Tokyo 108-0075 (JP)
(72) Inventor: Stadelmeier, Lothar, 70327, Stuttgart (DE); Schill, Dietmar, 70327, Stuttgart (DE); Robert, Jörg, 38106, Braunschweig (DE)
(74) Representative: Keck, Stephan

(56) References cited:
- EP-A- 1 650 921
- US-A1- 2007 268 975
- US-A1- 2008 095 255
- US-A1- 2008 107 011
- US-B1- 6 172 993

## Description

The present invention is directed to a new frame and signalling pattern structure for multi-carrier systems.

The present invention is hereby mainly directed (but not limited) to broadcast systems, such as for example cable based or terrestrial digital broadcast systems, in which content data, signalling data, pilot signals and so forth are mapped on to a plurality of frequency carriers, which are then transmitted in a given overall or complete transmission bandwidth. The receiver typically tunes to a partial channel (part of the overall transmission bandwidth) out of the complete channel bandwidth (sometimes called segmented reception) in order to receive only the content data which are necessary or wanted by the respective receiver. For example, in the ISDB-T standard, the overall channel bandwidth is hereby divided into 13 fixed segments of an equal length (equal number of frequency carriers).

EP 1 650 921 A discloses frequency or time-frequency correlation based schemes for a multi-carrier system, wherein scattered pilots are regularly positioned among information data and wherein the position of the scattered pilots could convey signalling information.

US 2007/0268975 A1 discloses different ways to configure preambles to support the transmission of data symbols in a wireless communication system.

The object of the present invention is to provide a transmitting apparatus and method, as well as a signal structure for a multi-carrier system, which allow a flexible tuning to any required part of the transmission bandwidth and which has a low overhead.

The above object is achieved by a transmitting apparatus according to claim 1, a transmitting method according to claim 8 and a frame pattern according to claim 15.

Further advantageous features are defined in the dependent claims.

The present invention therefore suggests a multi-carrier system which uses a frame structure or frame pattern in the frequency domain as well as in the time domain. In the frequency domain, each frame comprises at least two signalling patterns, which respectively carry signalling data as well as pilot signals on frequency carriers and respectively have the same length (or bandwidth). After a conversion into the time domain, in the resulting time domain signal, each frame then comprises a respective signalling symbol as well as data symbols. Each frame pattern covers the entire or overall transmission bandwidth in the frequency direction, so that the overall transmission bandwidth is therefore equally divided by the signalling patterns having the same respective length. The data patterns of each frame then follow the signalling patterns in time. The receiving apparatus can be freely, flexibly and quickly tuned to any wanted part of the transmission bandwidth, provided that the part of the transmission bandwidth to which the receiving apparatus can be tuned has at least the length of one of the signalling patterns. Hereby, the receiving apparatus is always able to receive the signalling data of an entire signalling pattern, so that on the basis and using the signalling data comprising the physical layer information necessary for the receipt of the succeeding data patterns, the data patterns can be received in the receiving apparatus. Further since each signalling pattern not only comprises signalling data, but also pilot signals mapped on frequency carriers, it is not necessary to provide dedicated preambles or training patterns consisting only of pilot signals, since the pilot signals comprised in the signalling pattern allow the necessary frequency offset detection and compensation in the receiving apparatus, so that the overall overhead is low as compared to systems with dedicated preambles or training patterns with pilot signals. The present invention is particularly advantageous in systems having a rather high signal-to-noise ratio, such as but not limited to cable based systems. Although the receiver can be flexibly tuned to any wanted part of the transmission bandwidth, it is always possible to receive the signalling data of an entire signalling pattern due to the new frame structure suggested by the present invention. Further, the new frame structure enables a fast tuning of the receiving apparatus to the wanted part of the transmission bandwidth.

Advantageously, said pilot signals mapped onto frequency carriers of said at least two signalling patterns in a frame form a pilot signal sequence. In other words, all pilot signals of a frame form a pilot signal sequence.

Alternatively, said pilot signals in each one of said at least two signalling patterns advantageously form a pilot signal sequence, wherein the pilot signal sequences are different from each other.

Advantageously, said pilot signal sequence is a pseudo random binary sequence.

Advantageously, said signalling mapping means is adapted to map said pilot signals on frequency carriers of said at least two signalling patterns with a differential modulation scheme.

Advantageously, said signalling mapping means is adapted to map a pilot signal onto every m-th frequency carrier of said at least two signalling patterns, m being an integer >1.

Advantageously, each of said at least two signalling patterns comprises at least one pilot band and said pilot signals are mapped onto frequency carriers of said at least one pilot band.

Each frame comprises additional data patterns succeeding said data patterns in the time dimension, each of said additional data patterns having the respective same length as the corresponding one of said previous at least one data pattern. In other words, the structure of the data patterns in each frame is advantageously set up in a way that data patterns are arranged in the frequency dimension so that the entire transmission bandwidth is covered. Additional data patterns are then arranged in the same frame but following the at data patterns in the time direction, whereby each additional or following data pattern has the same length (in the frequency dimension or direction) as the previous data pattern in the same frequency position. Thus, if a receiving apparatus is tuned to a specific part of the transmission bandwidth, at least one data pattern per frame is received, each of said data patterns having the same length but following each other in the time dimension. Hereby, the length of each of the data patterns in the transmitting apparatus could be adjusted dynamically. Alternatively or additionally, the number of additional data patterns in the time dimension could be adjusted dynamically. Also, the length of the data patterns in one frame in the time direction, i.e. the length of the time slots could be varying. Hereby it is important that the signalling patterns of the next frame all start at the same time point. Any dynamic changes in respect to the data patterns will then be signalled in the signalling patterns. The multi-carrier system with the frame structure as suggested by the present invention thus enables a very flexible transmission of data content in which the length of data patterns, and thus the amount of data per data pattern can be dynamically changed, for example from frame to frame or in any other required way. Alternatively, the length and/or the number of the data patterns may be fixed or permanent.

It has to be understood that the present invention can be applied to any kind of multi-carrier system in which a transmitting apparatus is adapted to transmit data in an entire transmission bandwidth and a receiving apparatus is adapted to selectively receive only a part of said entire transmission bandwidth. Non limiting examples for such systems may be existing or future uni-directional or bi-directional broadcast systems, such as wired or wireless (for example cable based, terrestrial etc.) digital video broadcast systems. The non limiting example for a multi-carrier system would be an orthogonal frequency division multiplex (OFDM) system, however, any other suitable system could be used in which data, pilot signals and the like are mapped on a plurality of frequency carriers. The frequency carriers may hereby be equidistant and respectively have the same length (bandwidth). However, the present invention may also be used in multi-carrier systems in which the frequency carriers are not equidistant and/or do not have the respectively same length. Further, it should be understood that the present invention is not limited to any kind of specific frequency range neither in the overall transmission bandwidth applied on the transmitting side nor on the selected part of the transmission bandwidth to which the receiving side is tuned. However, in some applications it might be advantageous to use a receiving bandwidth on the receiving side, i.e. a bandwidth for the part of the transmission bandwidth to which the receiver can be tuned, which corresponds to the bandwidth of receiving devices of existing (digital video broadcast or other) systems. A non limiting example for a receiver bandwidth may be 8 MHz, i.e. the receiving side can be tuned to any wanted 8 MHz bandwidth from the overall transmission bandwidth. Hereby, the overall transmission bandwidth could be a multiple of 8 MHz, for example 8 MHz, 16 MHz, 24 MHz, 32 MHz, 64 MHz, 256 MHz etc, so that the segmentation of the overall transmission bandwidth, i.e. length of each signalling pattern could be 8 MHz. However, other segmentations are possible, e.g. (but not limited to) a length of each signalling pattern of 4 MHz or 6 MHz.

Generally, in case of the non limiting example of 8 MHz for the receiver bandwidth, the length of each of the signalling patterns used in the frame structure of the present invention could be 8 MHz, 6 MHz, 4 MHz (or less).

The present invention is explained in more detail in the following description of preferred embodiments in relation to the enclosed drawings, in which
Fig. 1 shows a schematic diagram of an entire transmission bandwidth from which a selected part can be selectively and flexibly received by a receiver,
Fig. 2 shows an example for a segmentation of the overall transmission bandwidth,
Fig. 3 shows a schematic time domain representation of a frame structure according to the present invention,
Fig. 4 shows a schematic example of a frame structure or pattern according to the present invention,
Fig. 5 shows a part of the frame structure of Fig. 4 with an explanation of a reconstruction of a signalling pattern,
Fig. 6 shows a schematic example of a receiver filter characteristic,
Fig. 7 shows a further example of a frame structure of pattern according to the present invention,
Fig. 8 shows a part of a further example of a frame structure or pattern according to the present invention,
Fig. 9 shows a first example of an allocation of pilot signals to a signalling pattern,
Fig. 10 shows a second example of an allocation of pilot signals to a signalling pattern,
Fig. 11 shows a further example of a reconstruction of a signalling pattern,
Fig. 12 shows an example of the adaptation to different channel bandwidths,
Fig. 13 schematically shows an example of a frame structure of the present invention in the time dimension,
Fig. 14 shows a schematic block diagram of an example of a transmitting apparatus according to the present invention, and
Fig. 15 shows a schematic block diagram of an example of a receiving apparatus according to the present invention

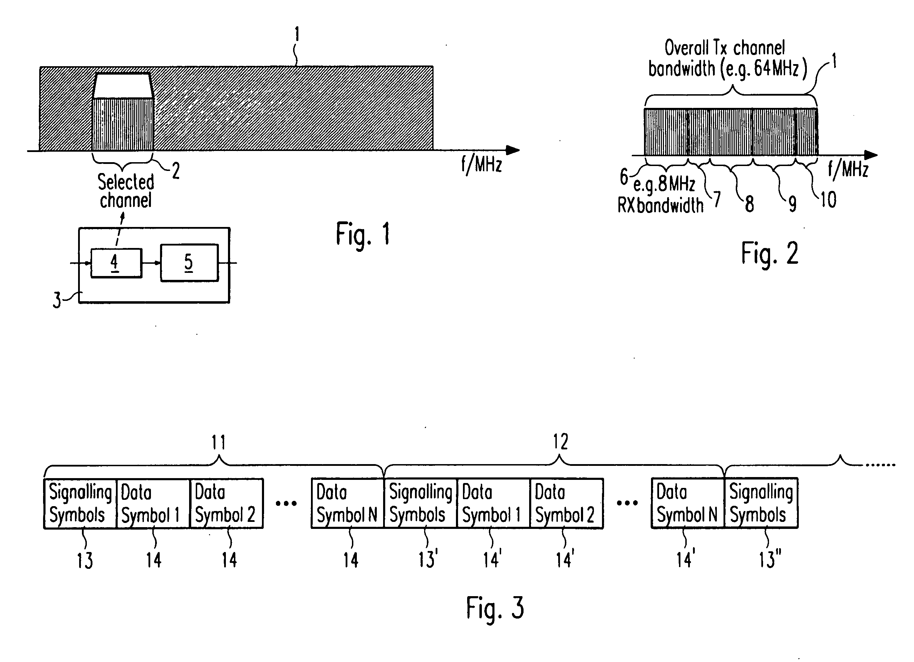

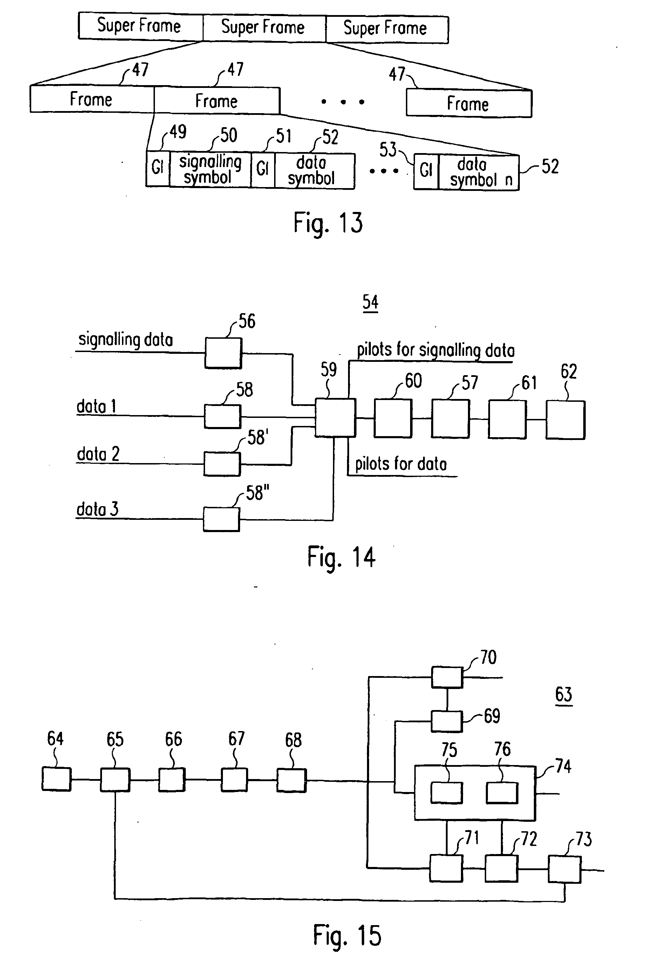

Fig. 1 shows a schematic representation of an entire transmission bandwidth 1, in which a transmitting apparatus according to the present invention, as for example the transmitting apparatus 54 schematically shown in Fig. 14, transmits signals in a multi-carrier system in line with the present invention. Fig. 1 further schematically shows a block diagram of a receiving apparatus 3 of the present invention, which is adapted to be tuned to and selectively receive a selected part 2 of the transmission bandwidth 1. Hereby, the receiving apparatus 3 comprises a tuner 4 which is adapted to be tuned to and selectively receive the wanted part 2 of the transmission bandwidth 1 as well as further processing means 5 which perform the further necessary processing of the received signals in line with the respective communication system, such as a demodulation, channel decoding and the like. A more elaborate example of a receiving apparatus according to the present invention is shown in the schematic block diagram of Fig. 15, which shows a receiving apparatus 63 comprising a receiving interface 64, which can for example be an antenna, an antenna pattern, a wired or cable-based receiving interface or any other suitable interface adapted to receive signals in the respective transmission system or communication system. The receiving interface 64 of the receiving apparatus 63 is connected to a receiving means 65 which comprises a tuning means, such as the tuning means 4 shown in Fig. 1 as well as further necessary processing elements depending on the respective transmission or communication system, such as down conversion means adapted to down convert the received signal to an intermediate frequency or the base band.

As stated above, the present invention enables a flexible and changing reception of a wanted part 2 of the transmission bandwidth 1 in a receiver by providing a specific and new frame structure for a multi-carrier system. Fig. 2 shows a schematic representation of an overall transmission bandwidth 1, within which a transmitting apparatus 54 of the present invention is adapted to transmit data content, such as video data, audio data or any other kind of data, in different segments or parts 6, 7, 8, 9 and 10. For example, the parts 6, 7, 8, 9 and 10 could be used by the transmitting apparatus 54 to transmit different kinds of data, data from different sources, data intended for different recipients and so forth. The parts 6 and 9 have for example a maximum bandwidth, i.e. the maximum bandwidth which can be received by a corresponding receiving apparatus 63. The parts 7, 8 and 10 have smaller bandwidths. The present invention now suggests to apply a frame structure or pattern to the entire transmission bandwidth 1 whereby each frame comprises at least two signalling patterns adjacent to each other in the frequency direction and a number of data patterns. Each signalling pattern has the same length and comprises signalling data as well as pilot signal mapped onto its frequency carriers (frequency subcarriers in the case of an OFDM system). In other words, the overall transmission bandwidth 1 is divided into equal parts for the signalling patterns, whereby the maximum bandwidth to which a receiver can be tuned, for example the bandwidth shown for parts 6 and 9 in Fig. 2, has to be equal or larger than the length of each signalling pattern. The new frame structure proposed by the present invention therefore only comprises signalling patterns and data patterns, but does not comprise any separate training patterns or other patterns in which pilot signals are comprised. In other words, the present invention suggests a new frame structure with a preamble which only consists of two or more signalling patterns, and with data patterns following the preamble in the time direction.

It should be noted that the length of the various data parts in the transmission bandwidth cannot exceed the length (number of frequency carriers) of the maximum bandwidth to which a receiver can be tuned as will be explained in more detail further below.

Fig. 3 shows a schematic representation of a time domain structure of frames 11, 12 according to the present invention. Each frame 11, 12 comprises one or more signalling symbols 13, 13' and several data symbols 14, 14'. Hereby, in the time domain, the signalling symbols are preceding the data symbols. Each frame 11, 12 may have a plurality of data symbols, wherein systems are possible in which the number of data symbols in each frame 11, 12 varies. The pilots signals comprised in the signalling symbols are used in a receiving apparatus 63 to perform channel estimation and/or integer frequency offset calculation. The time synchronization can e.g. be done by performing a guard interval correlation (or any other suitable technique) on guard intervals of received signalling symbols and/or data symbols in the time domain. The signalling symbols 13, 13' further contain signalling information, for example all physical layer information that is needed by the receiving apparatus 63 to decode the received signals, such as but not limited to L1 signalling data. The signalling data may for example comprise the allocation of data content to the various data patterns, i.e. for example which services, data streams, modulation, error correction settings etc. are located on which frequency carriers, so that the receiving apparatus 63 can obtain information to which part of the entire transmission bandwidth it shall be tuned. According to the invention all signalling patterns in a frame contain the identical signalling data. Alternatively, in an example not covered by the invention, each signalling pattern may contain signalling data indicating the offset or distance of the respective signalling pattern from the beginning of a frame so that the receiving apparatus 63 may optimize the tuning to the wanted part of the transmission frequency in a way that the receipt of the signalling patterns and the data patterns is optimized. On the other hand, the offset or distance of the respective signalling pattern from the beginning of a frame can also be encoded in pilot signals, in pilot signal sequences or in guard bands allocated to or comprised in the signalling patterns, so that every signalling pattern in one frame can have the identical signalling data. The use of the frame structure according to the present invention has the further advantage that by dividing the data stream into logical blocks, changes of the frame structure can be signalled from frame to frame, whereby a preceding frame signals the changed frame structure of the or one of the succeeding frames. For example, the frame structure allows a seamless change of modulation parameters without creating errors.

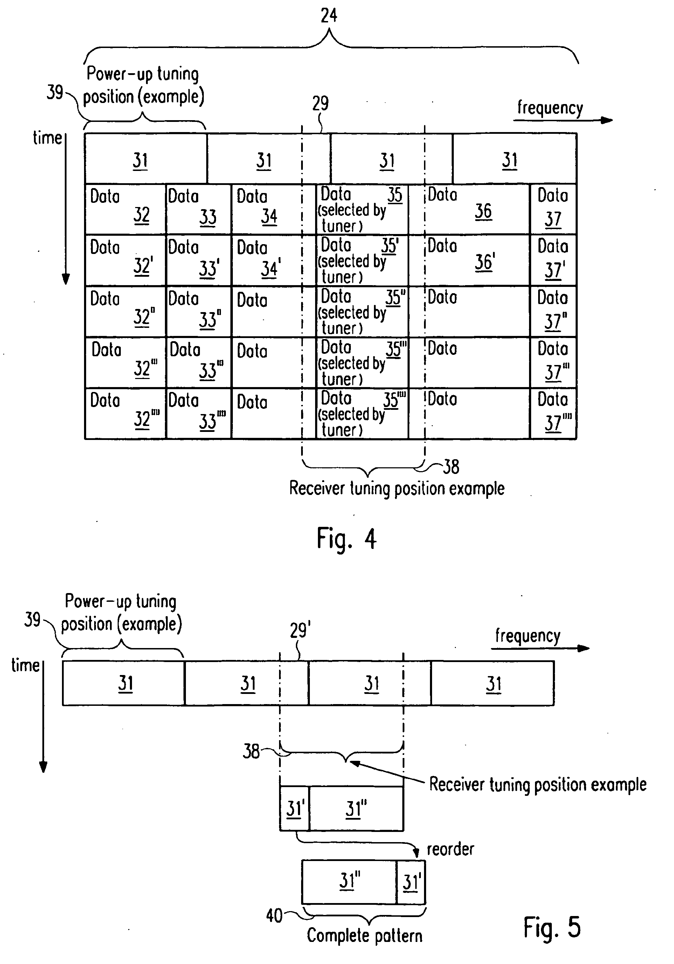

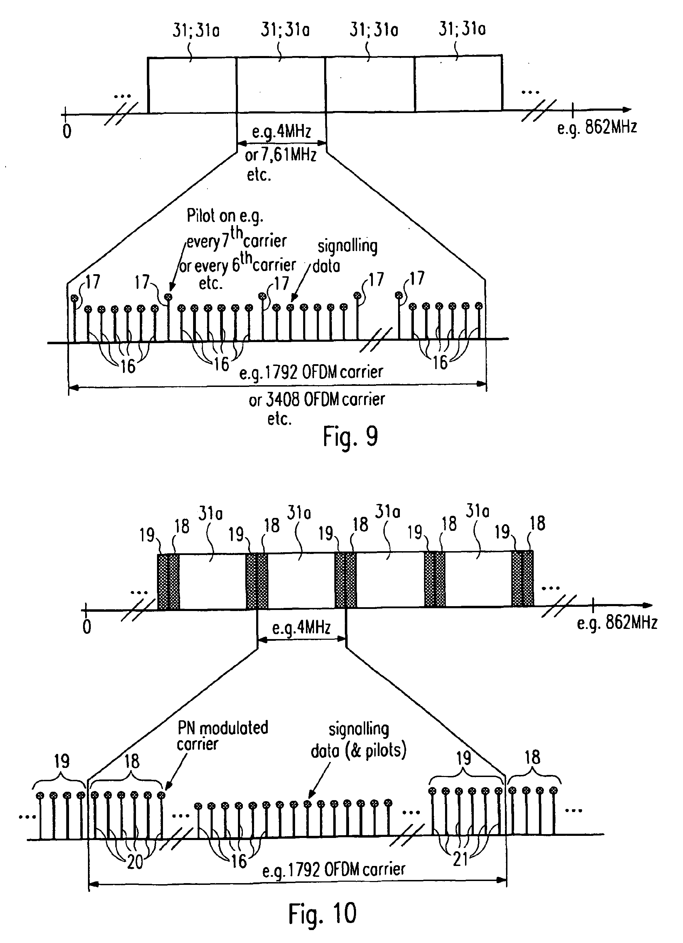

Fig. 4 shows a schematic example of a frequency domain representation of a frame structure or pattern 29 according to the present invention. The frame structure 29 covers the entire transmission bandwidth 24 in the frequency direction and comprises at least two signalling patterns 31 adjacent to each other in the frequency direction, each carrying the identical or almost identical signalling data mapped on respective frequency carriers and having the same length. In the example shown in Fig. 4, the entire transmission bandwidth 24 is sub-divided into four signalling patterns 31, but any other higher or lower number of signalling patterns might be suitable. In the transmitting apparatus 54 of the present invention as shown in Fig. 14, a signalling mapping means 55 is adapted to map the signalling data as well pilot signals onto the frequency carriers of each signalling pattern. Advantageously, a pseudo noise sequence or a CAZAC sequence is used for the pilot signals, but any other pilot signal sequence with good pseudo noise and/or correlation properties might be suitable. Each signalling pattern of a frame might comprise a different pilot signal sequence, but alternatively, the pilot signals of the signalling pattern of one frame might form a single pilot signal sequence. The signalling mapping means 55 might be adapted to map a pilot signal onto every m-th frequency carrier 17 (m being a natural number larger than 1) in each signalling pattern, so that the frequency carriers 16 in between the pilots carry the signalling data, as will be explained in more detail in relation to Fig. 9 below. Additionally or alternatively, the signalling mapping means 55 may be adapted to map pilot signals onto frequency carriers 20, 21 of at least one pilot band 18, 19 comprised in a signalling pattern, as will be explained in more detail in relation to Fig. 10 below. A pilot band 18, 19 consists of a number of immediately adjacent frequency carriers, onto which pilot signals are mapped. Hereby, each signalling pattern may have a single pilot band 18 or may have two pilot bands 18, 19, one at the beginning and one at the end of the signalling pattern in the frequency direction. The length of the pilot bands (number of frequency carriers allocated to a pilot band) is advantageously the same for each signalling pattern. The length or bandwidth 39 of every signalling pattern 30 may be the same as the bandwidth 38 to which the tuner of the receiving apparatus 63 can be tuned. However, the part of the transmission bandwidth to which the tuner of the receiving apparatus 63 can be tuned, may be larger than the length of a signalling pattern 30.

The received pilots, i.e. pilot signals mapped on every m-th frequency carrier and/or comprised in pilot bands of a received signalling pattern, (after transformation into the frequency domain in the time to frequency transformation means 68) are used for a channel estimation of the frequency carriers in the frame in a channel estimation means 69, which provides a de-mapping means 70 with the necessary channel estimation information enabling a correct de-mapping of the data in the received data patterns. Also, the received pilots are used in the receiving apparatus 63 for an integer frequency offset detection in a corresponding integer frequency offset detection means 67 which enables a detection and then a compensation of the integer frequency offset of the received signals. The integer frequency offset is the deviation from the original (transmitted) frequency in multiples of the frequency carrier spacing.

In an example not covered by the invention, each signalling pattern 31 comprises the location of the signalling pattern 31 within the frame. For example each signalling pattern 31 in each frame has and carries the identical signalling data, except the location of the respective signalling pattern in the frame, which is different in each signalling pattern 31 in a frame. The signalling data are for example L1 signalling data which contain all physical layer information that is needed by the receiving apparatus 63 to decode received signals. However, any other suitable signalling data may be comprised in the signalling patterns 31. The signalling patterns 31 might for example comprise the location of the respective data segments 32, 33, 34, 35, 36 so that a receiving apparatus 63 knows where the wanted data segments are located so that the tuner of the receiving apparatus 63 can tune to the respective location in order to receive the wanted data segments. According to the invention, as stated above, each signalling pattern of a frame comprises the identical signalling data, and the location of the respective signalling pattern within a frame is signalled in a different way, e.g. by means of the pilot signal sequence of the signalling patterns or by means of information encoded in guard bands or the like. As stated above, each of the signalling patterns 31 could comprise information about each of the data patterns comprised in a frame. However, in order to reduce the overhead, each signalling pattern 31 could comprise information about only a part or some of the data patterns, for example but not limited to the ones which are located within (or located within and adjacent to) the frequency band in which the signalling pattern 31 is located. In the example of Fig. 4, the first signalling pattern 31 in the frame could comprise information about the data patterns 32 and 33 (and the time wise following data patterns 32', 32"...33', 33" etc). The second signalling pattern in the frame could comprise information about the data patterns 33, 34 and 35 (and the time wise following data patterns 33', 33"...34', 34"...35', 35" etc).

As shown in Fig. 15, the receiving apparatus 63, after the receiving means 65 with the tuner, comprises a time synchronization means 66 adapted to perform time synchronization and a fractional frequency offset detection means 67 adapted to perform fractional frequency offset detection and compensation on the received time domain symbols. The received time domain symbols are then supplied to a time to frequency transformation means 68 for transforming the received time domain signals into the frequency domain, where after the signalling data (after an optional reconstruction in a reconstruction means 71), are de-mapped in a de-mapping means 72 and then evaluated in an evaluation means 73. The evaluation means 73 is adapted to extract the necessary and required signalling information from the received signalling data. If necessary, additional signalling patterns could be provided in the time direction immediately succeeding the signalling patterns 31.

The frame structure or pattern 29 further comprises data patterns or segments extending over the entire frequency bandwidth 24 in the frequency direction and following the signalling patterns 31 in the time direction. In the time slot immediately following the time slot in which the signalling patterns 31 are located, the frame structure 29 shown in Fig. 4 comprises several data segments 32, 33, 34, 35, 36 and 37 with different lengths, i.e. a different number of respective frequency carriers onto which data are mapped. The frame structure 29 further comprises additional data segments in succeeding time slots, whereby the additional data patterns respectively have the same length and number of frequency carriers as the respectively preceding data pattern. For example, the data pattern 32', 32", 32"' and 32'" have the same length as the first data pattern 32. The data patterns 33', 33" ', 33"' and 33"" have the same length as the data segment 33. In other words, the additional data patterns have the same frequency dimension structure as the several data patterns 32, 33, 34, 35, 36 and 37 in the first time slot after the signalling patterns 31. Thus, if the receiving apparatus 63 for example tunes to a part 38 of the transmission bandwidth in order to receive the data pattern 35, all time wise succeeding data patterns 35', 35" and 35"' which have the same length as the data pattern 35 can be properly received.

The flexible and variable data pattern structure of the frame structure or pattern 29 as suggested by the present invention can for example be implemented in the transmitting apparatus 54 of the present invention as shown in Fig. 14 by mapping of various different data streams, for example with different kinds of data and/or data from different sources, as visualized by the branches data 1, data 2 and data 3 in Fig. 14. The respective data are then mapped onto frequency carriers in respective data patterns by the respective data mapping means 58, 58' and 58". As stated, at least some of the various data patterns may have different lengths, i.e. different numbers of frequency carriers in case that the frequency carriers are equidistant and have the same bandwidth, respectively. Alternatively, the number of data patterns in the frequency direction may be the same as the number of signalling patterns, wherein the length (or bandwidth) of each data patterns may be identical to the length of each signalling pattern and they may be aligned to each other (have the same frequency direction structure). Alternatively, each data pattern might have the same length and the number of the data patterns might be a multiple of the number of signalling patterns, while still having the same frequency structure and alignment. Thus for example, 2, 3, 4 or more data patterns would be aligned to each of the signalling patterns. Generally, the length of the data patterns needs to be smaller or at maximum equal to the effective receiver bandwidth so that the data patterns can be received in the receiving apparatus 63. Further, the transmitting apparatus 54 may be adapted to change the data pattern structure, e.g. the length and/or the number of the data patterns dynamically. Alternatively, the structure of the data patterns could be fixed or permanent.

Further, it is to be noted that the data patterns could advantageously comprise pilot signals mapped on some of the frequency carriers, e.g. every k-th frequency carrier, k being an integer > 1, in order to enable a fine channel estimation on the receiving side. Hereby, the pilot signal could be scattered among the carriers with the data in a regular or an irregular pattern.
In the transmitting apparatus 54, the frequency carriers with the signalling data and the pilot signals from the signalling mapping means 55 and the frequency carriers with the data from the various data mapping means 58, 58', 58" are then combined to a frame pattern or structure 29 according to the present invention in a frame forming means 59. The formed frames are then transformed into time domain symbols by a frequency to time transforming means 60 and supplied to a guard interval adding means 57 which adds guard interval to the signalling and the data symbols. The thus formed transmission symbols are then transmitted by a transmitting means 61 via a transmitting interface 62.

Generally, the frame structure of the present invention could be fixed or permanent, i.e. the overall bandwidth as well as the extension of each frame in the time direction could be fixed and always the same. Alternatively, the frame structure can also be flexible, i.e. the overall bandwidth and/or the extension of each frame in the time direction could be flexible and changed from time to time depending on the desired application. For example, the number of time slots with data patterns could be flexibly changed. Hereby, the changes could be signalled to a receiving apparatus in the signalling data of the signalling patterns.

During the start-up phase or initialization phase of the receiving apparatus 63, the receiving apparatus 63 tunes to an arbitrary frequency part of the overall frequency bandwidth. In the non-limiting example of a cable broadcast system, the signalling pattern 30 could for example have a 8 MHz bandwidth (it has to be understood, however, that the signalling patterns could also have any other bandwidth, such as 4 MHz, 6 MHz etc.). Thus, during the start-up phase, the receiving apparatus 63 is able to receive an entire signalling pattern 30 in the original or re-ordered sequence and to perform a time synchronization in the time synchronization means 66, e.g. by performing a guard interval correlation on the guard intervals of received signalling symbols (or data symbols) or by using any other suitable technique to obtain a time synchronization. The receiving apparatus 63 further comprises the mentioned fractional frequency offset detection means 67 adapted to perform a detection and calculation of the fractional frequency offset of the received signals from fractions of the frequency carrier spacing in order to allow fractional frequency compensation. The thus obtained fractional frequency offset information could then be supplied to the tuner comprised in the receiving means 65 which then performs fractional frequency compensation. The fractional frequency compensation could also be done by other suitable techniques. After transforming the received time domain signals to the frequency domain in the time to frequency transformation means 68, the pilot signals in the received signalling patterns are used to perform a channel estimation (usually a coarse channel estimation) in the channel estimation means 69 and/or an integer frequency offset calculation. The integer frequency offset calculation is performed in an integer frequency offset detection means 74 which is adapted to detect and calculate the frequency offset of the received signals from the original frequency structure, wherein the frequency offset is counted in integer multiples of the frequency carrier spacing (thus integer frequency offset). The thus obtained integer frequency offset information could then be supplied to the tuner comprised in the receiving means 65 which then performs integer frequency compensation. The integer frequency compensation could also be done by other suitable techniques. Since the fractional frequency offset has already been calculated and compensated by means of the fractional frequency offset detection means 67, the complete frequency offset compensation can therefore be achieved. In the evaluation means 73 of the receiving apparatus 63, the received signalling data are evaluated, for example the location of the received signalling pattern in the frame is obtained so that the receiver can freely and flexibly tune to the respectively wanted frequency position, such as the part 38 is shown in Figure 4. However, in order to be able to properly evaluate the signalling data of the signalling patterns 31 in case that the tuning position of the receiving apparatus 63 does not match with the signalling pattern structure, the received signalling signals have to be re-ordered which is performed in a re-constructing means 71 as described. Fig. 5 shows this reordering in a schematic example. The last part 31' of a previous signalling pattern is received before the first part 31 " of a succeeding signalling pattern, where after the reconstructions means 71 places the part 31' after the part 31" in order to reconstruct the original sequence of the signalling data, where after the reordered signalling pattern is evaluated in the evaluation means 73 after a corresponding de-mapping of the signalling data from the frequency carriers in the de-mapping means 72. It is to be remembered that the content of each signalling pattern 31 is the same, so that this reordering is possible.

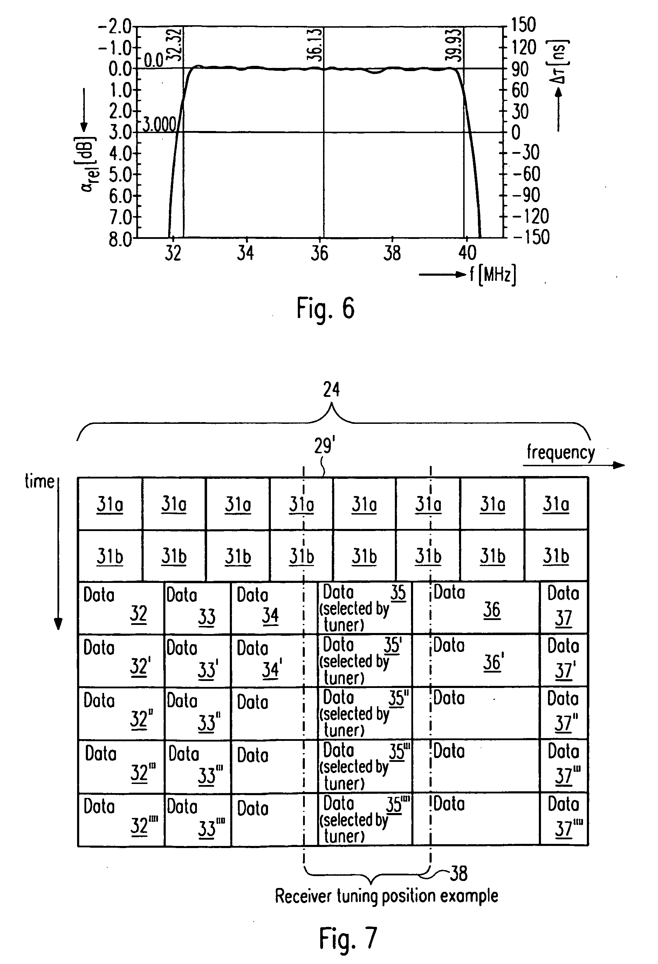

Often, a receiving apparatus does not provide a flat frequency response over the complete receiving bandwidth to which the receiver is tuned. In addition, a transmission system usually faces increasing attenuation at the boarder of the receiving bandwidth window. Fig. 6 shows a schematic representation of a typical filter shape example. It can be seen that the filter is not rectangular, so that e.g. instead of 8 MHz bandwidth, the receiving apparatus is only able to effectively receive 7.61 MHz bandwidth. The consequence is that the receiving apparatus 63 may not be able to perform the reordering of the signalling data as described in relation to Fig. 5 in case that the signalling patterns 31 have the same length and bandwidth as the receiving bandwidth of the receiving apparatus 63, so that some signals are lost and cannot be received at the border of the receiving bandwidth. In order to overcome this problem, and other problems and in order to ensure that the receiving apparatus 63 is always able to receive one complete signalling patterns in the original sequence and does not have to reorder or rearrange the received signalling signals, the present invention alternatively or additionally suggests to use signalling patterns 31a which have a reduced length as compared to the receiver bandwidth.

According to the example shown in Fig. 7, it is suggested to use signalling patterns 31 a which have half the length of a receiver bandwidth, but still the same frequency structure. In other words, respective two (i.e. pairs) of the half length signalling patterns 31a are matched and aligned with the receiver bandwidth. Hereby, each pair of signalling patterns 31a would have the identical signalling data or almost identical signalling data including the (varying) location of the signalling patterns 31a in the respective frame. However, in relation to the other pairs of signalling patterns, in these other pairs, since they have a respective different location within the frame, the signalling data would be identical except the location information. In the above example of the receiving apparatus 63 having a bandwidth or length of 8 MHz, the signalling pattern 31 a would then each have a length or bandwidth of 4 MHz. Hereby, in order to ensure that the same amount of signalling data as before can be transmitted, it might be necessary to add additional half length signalling patterns 31b in the time slot succeeding the signalling patterns 31a and before the data patterns 32, 34, 35, 36 and 37. The additional signalling patterns 31b have the same time and frequency arrangement/alignment as the signalling patterns 31a, but comprise additional and different signalling information as the signalling information contained in the signalling patterns 31a. In this way, the receiving apparatus 63 will be able to receive the signalling patterns 31a and 31 b completely and the reconstruction means 71 of the receiving apparatus is adapted to combine the signalling data of the signalling patterns 31a and 31 b to the original sequence. In this case, the reconstruction means 71 in the receiving apparatus 63 can be omitted.
It is also advantageously possible to only provide one time slot with half length signalling patterns 31 a if all necessary signalling data can be transmitted in the half length and the additional signalling patterns 31 b are not necessary. In this case, each signalling pattern 31 a comprises the identical (or almost identical) signalling data and each received signalling pattern 31a enables the receiving apparatus 63 to always tune to and receive any wanted part of the transmission bandwidth and thus the wanted data pattern(s). Alternatively, even more half length signalling patterns could be used in the succeeding time slot after the signalling patterns 31b.

It should be generally (for all embodiments of the present invention) noted that the length (or bandwidth) of the data patterns and/or the signalling patterns could be adapted to, e.g. could be smaller than or at maximum equal to, the effective receiving bandwidth of the receiving apparatus 63, for example to the output bandwidth of the receiving band pass filter, as described above.

Further, for all embodiments of the present invention, it could be advantageous if one or more of the signalling patterns 31; 31a, 31b are succeeded in the time direction by one or more additional signalling patterns with the same length and location within the frame. For example, the first signalling pattern in a frame could have one or more additional signalling patterns in the succeeding time slots. The additional signalling patterns could hereby have the identical or almost identical signalling information as the first signalling pattern. Hereby, the other signalling patterns in a frame do not need to have additional signalling patterns. Generally, the number of signalling patterns in each frequency location within a frame could be varying. For example, it could be advantageous if in each frequency location of a frame a number of signalling patterns is provided which is necessary in view of notches or other disturbances. Alternatively or additionally, the number of signalling patterns in each frequency location within a frame could be varying depending on the amount of signalling data. Hereby, for example, if more data patterns need to be signalized, more signalling patterns could be necessary in the time direction. The length of the signalling patterns in the time direction could hereby be part of the signalling data comprised in the signalling patterns.

In a non-limiting example, the transmission and reception of the signalling data, e.g. L1 (Level 1) signalling data, and the additional pilots, which are used for fractional frequency synchronization and channel equalization, is based on OFDM. The signalling data are transmitted in blocks or patterns of e.g. 4 MHz, but any other suitable size could be used. The only necessary condition is to have one complete signalling pattern within the tuning window, but this condition could be fulfilled by using two or more signalling patterns having a smaller size succeeding each other in the time direction as described in relation to Fig. 7. Therefore, the maximum bandwidth of the signalling pattern may be e.g. the tuning window of a state-of-the-art tuner, i.e. 7.61 MHz.). Some numerical examples are given in the following. In a first example, each signalling pattern 31; 31a, 31b covers exactly 4 MHz, while this corresponds to 1792 OFDM frequency carriers while having duration T_{U} of the useful part of the OFDM symbol of 448µs. In a second example, each signalling pattern covers 7.61 MHz (exactly 3409/448usec), while this corresponds to 3409 OFDM carriers while having duration T_{U} of the useful part of the OFDM symbol of 448µs.

According to a first aspect of the present invention, a pilot signal is mapped to every m-th frequency carrier 17 of a signalling pattern 31a, as schematically shown in Fig. 9 (m is an integer >1). It has to be clear, however, that this possibility equally applies to the signalling pattern 31 shown in Fig. 4, or generally to signalling patterns of any suitable length. The frequency carriers 16 in between the pilot signal carrying frequency carriers are carrying signalling data. The mapping of the signalling data to the frequency carriers 16 and the mapping of the pilot signals 17 to every m-th frequency carrier is performed by a signalling mapping means 55 comprised in the transmitting apparatus 54 as shown in Fig.14. Generally, as stated above, the pilot signals form a pilot signal sequence. Hereby, the pilots are for example modulated against each other by a differential modulation scheme, such as but not limed to D-BPSK (differential binary phase shift keying). The modulation is for example obtained by means of a PRBS (pseudo random binary sequence register, e.g. 2^23-1, comprised in the signalling mapping means 55 of the transmitting means 54. The repetition rate of m shall allow unambiguous D-BPSK decoding on the receiving side, such as the receiving apparatus 63 of the present invention as shown in Fig. 15, even for multi path channels. Repetition rates m are for example 7, 14, 28, ... for 4 MHz signalling patterns since 7, 14, 28... are dividers of 1792 (== number of frequency carriers in a 4 MHz signalling pattern). In this example, an advantageous repetition value is m = 7. In other words, every 7-th frequency carrier carries a pilot signal even across adjacent signalling patterns. This example results in 256 pilot signals per 4 MHz signalling pattern. However, other repetition values than the above examples might be advantageous depending on the respective length of a signalling pattern and/ or other factors. In case that the data pattern(s) also carry pilot signals mapped on some of the frequency carriers in between the frequency carriers with the data, it can be advantageous if the pilot signals are mapped on frequency carriers of the data pattern(s) in location which correspond to the frequency carriers in the signalling pattern(s) on which pilot signals are mapped. Hereby, the density of the pilot signals in the data pattern(s) does not need to be as high as the density of the pilot signals in the signalling pattern(s). For example, if a pilot signal is mapped onto every m-th frequency carrier in the signalling pattern(s) (m being an integer > 1), a pilot signal could be mapped onto every n-th frequency carrier of the data pattem(s), whereby n is an integer > 1 and an integer multiple of m. As an advantageous example, if m = 7, then n = 28 (or any other suitable number). The pilot signals in the data pattern(s) could also form a pilot signal sequence as explained for the signalling pattern(s).

Regarding the creation of the pilot signal sequence for the signalling pattern(s) and the data pattern(s), which is for example a PN sequence, there are two options:
- Option 1: Every signalling pattern in each frame carries a different pilot signal sequence. In the above example, the initialization of the PRBS register is aligned to the transmission frequency. 256 pilots are located within every frequency block of 4MHz. The pilot signal sequence of each 4 MHz block is calculated separately. This allows a memory efficient implementation on receiver side.
- Option 2: The pilot signal sequence is applied once for all the signalling patterns comprised in the complete transmission bandwidth. The receiver, e.g. the receiving apparatus 63, stores this known sequence, for example in a storage means, which can be part of or may be external to the integer frequency offset detection means 74, and extracts the frequency block that corresponds to its current tuning position.

All other carriers 16 within the signalling pattern are used for the transmission of the L1 signalling data. The start of the signalling data in each signalling pattern is always aligned to the 4MHz structure, i.e. it always starts at multiples of 4 MHz in the depicted example. Each 4 MHz signalling pattern may carry exactly the same information, since the pilot signal sequences or the pilot signal sequence give the receiving apparatus 63 information about the location of the respective signalling pattern in each frame. Alternatively, each signalling pattern may additionally comprise the location of the signalling pattern in the frame. Further, in order to reduce the peak-to-average power ratio of the output time domain signal, the signalling data of each signalling pattern may be scrambled in the transmitter by a unique scrambling sequence, which may be obtained by means of the signalling pattern number.

In the receiving apparatus 63, the pilot signals comprised in the signalling pattern 31; 31a, 31b are used (after a time to frequency transformation of the received time domain symbols in the time to frequency transformation means 68) in an integer frequency offset detection means 74 to detect the integer frequency offset, the result of which is then used in the receiving apparatus 63 to perform integer frequency offset compensation in the frequency domain. More specifically, the pilots signals (which are for example D-BPSK modulated) comprised in the signalling patterns within the received frequency range are demodulated in a demodulation means 75 comprised in the integer frequency offset detection means 74. Then, a correlation means 76 comprised in the integer frequency offset detection means 74 performs a correlation of the demodulated pilot signal (pilot signal sequences) with the stored or generated (expected) pilot signal sequence , e.g. a PRBS sequence, in order to get aligned in the exact frequency offset. The correlation is done with the PRBS sequence that is expected at the beginning of the signalling pattern (can be listed in tables on receiver side). If the sequence is found within the received symbol, the receiving apparatus 63 knows the exact frequency offset and compensate it. More specifically, the obtained integer frequency offset can be supplied to and used in the reconstructing means 71 and the de-mapping means 72 for correctly demodulating the signalling data, as well as supplied to and used in the channel estimation means 69 in order to perform the channel estimation and therefore the equalization.

The necessary time synchronization as well as the fractional frequency offset detection and compensation are for example done in the time domain on the received time domain symbols in the time synchronization means 66 and the fractional frequency offset detection means 67 using guard interval correlation using the guard intervals of the received signalling symbols and/or data symbols (cf. Fig. 13 showing a time domain representation of a frame with signalling symbols, data symbols, and guard intervals). The time synchronization could alternatively be done by performing a correlation of the absolute values between the received time domain symbols and a receiver generated time domain symbol, in which only pilot signals are modulated. A peak in the correlation of the received symbol and the receiver generated symbol allows an exact time synchronization.

According to a second aspect of the present invention which is schematically shown in Fig. 10, each signalling pattern 31a (or signalling pattern 31) comprises at least one pilot band 18, 19 comprising pilot signals mapped on the frequency carriers 20, 21 of the pilot band 18, 19. The pilot bands 18, 19 respectively comprise a number of immediately adjacent frequency carriers on which pilot signals are mapped. The pilot band 18, 19 may each have the same number of frequency carriers or a different number of frequency carriers. Hereby, each signalling pattern 31 a may comprise a pilot band 18, 19 at its beginning or at its end (in the frequency direction). Alternatively, each signalling pattern may comprise a pilot band 18, 19 at each border, i.e. at the beginning and at the end of the pattern. All other statements and definitions made above in relation to the first aspect of the present invention also apply to the second aspect, including Option 1 and Option 2. It has to be understood that the first and the second aspect of the invention could be combined, i.e. each signalling pattern may comprise at least one pilot band 18, 19 as described above as well as pilot signals mapped on every m-th frequency carrier 12.

In both aspects of the present invention described above, the relation between number of frequency carriers with pilot signals and the number of frequency carriers with signalling data in each signalling pattern might be variable and subject to the respective signalling and offset compensation requirements.

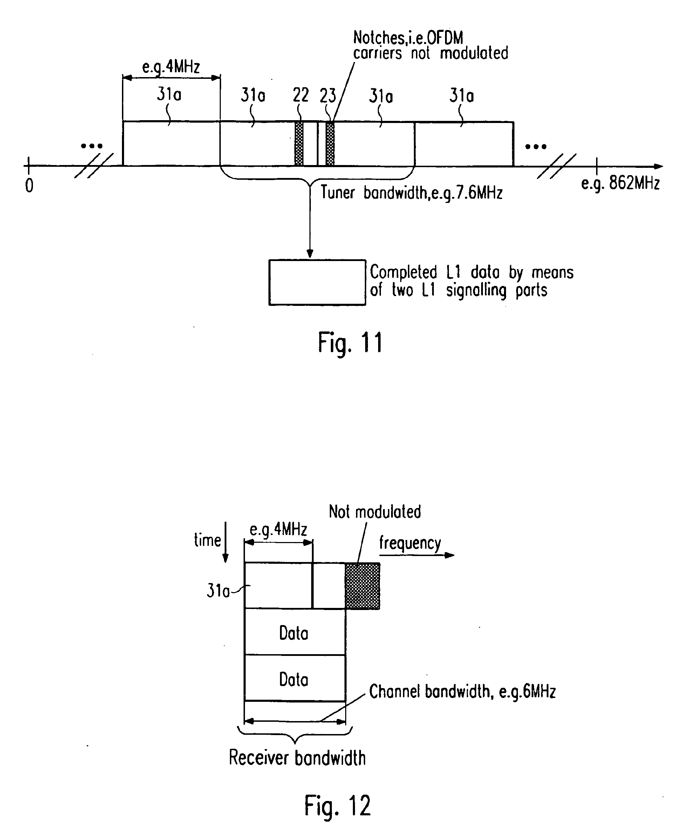

As schematically shown in Fig. 11, the transmitting apparatus 54 may blank (notch) certain regions 22, 23 of the overall transmission bandwidth in order to avoid disturbances from the cable network into other services, e.g. aircraft radio. Therefore, some part of the spectrum may not be modulated. In this case, the affected frequency carriers within the signalling pattern 31; 31 a, 31b shall not be modulated as well. As the synchronization proposed by the present invention is very strong, this does not affect the frequency synchronization performance by means of the D-BPSK modulated pilots. The missing part of the signalling data is recovered by means of the repetition of the signalling data (every signalling pattern 31; 31a, 31b in a frame comprises identical or almost identical signalling data), e.g. by combining parts from two adjacent signalling patterns as shown in Fig. 11, and eventually by means of the strong error protection added to the signalling patterns by a error coding means 56 comprised in the transmitting apparatus 54. Missing parts of the signalling data at the edges of the transmission bandwidth shall be treated as very broad notches.

An alternative or additional possibility to deal with notches or other problems could be to subdivide the signalling pattern 31; 31 a, 31 b into two or more parts and to invert the sequence of the two or more parts in each signalling pattern (of a frame) from frame to frame. For example, if the first signalling pattern in a frame is subdivided in a first and a (succeeding) second part, the (corresponding) first signalling pattern in the immediately next frame would have the second part at the beginning and the first signalling part succeeding, i.e. an inverted sequence. Thus, if for example the second part is notched or otherwise disturbed, the receiver would have to wait for the next frame where the second part could be received without problems (since the succeeding first part would be disturbed).

An adaptation of the signalling patterns 31; 31 a, 31 b to different tuning bandwidths of the receiving side may for example be done by changing the distance of the frequency carriers in the signalling patterns. Alternatively, it is possible to keep the frequency carrier distance constant and to cut parts of the signalling patterns at the edges of the transmission bandwidth, e.g. by not modulating the respective frequency carriers, as schematically shown in Fig. 12, which shows the adaptation of a scheme with 4 MHz signalling patterns to a 6 MHz tuning bandwidth thus enabling the reception of data patterns having a length up to 6 MHz.

Eventually, each signalling pattern 31; 31a, 31b could additionally comprise a guard band at the beginning and the end of each pattern. Alternatively, in some applications it might be advantageous if only the first signalling pattern in each frame, in the example of Figure 4 the signalling pattern at position 39, could comprise a guard band only at the beginning of the pattern, and the last signalling pattern in each frame could comprise a guard band only at the end of the pattern. Alternatively, in some applications only the first signalling pattern in each frame, in the example of Figures 4 the signalling pattern at position 39, could comprise a guard band at the beginning as well as at the end of the pattern, and the last signalling pattern in each frame could comprise a guard band at the beginning as well as at end of the pattern. The length of the guard band comprised in some or all of the signalling patterns could for example be smaller or at maximum equal to the maximum frequency offset the receiving apparatus can cope with. In the mentioned example of a receiver bandwidth of 8MHz, the guard band could for example have a length of 250 to 500 kHz or any other suitable length. Also, the length of each of the guard bands comprised in the signalling patterns could be at least the length of the carriers which are not received in the receiving apparatus due to the filter characteristics as described in relation to Fig. 6.
For example, in an OFDM system in which the overall transmission bandwidth is a multiple of 8 MHz (4nk mode: k is the Fourier window size of 1024 carriers/samples, n= 1, 2, 3,4 ....) and each signalling pattern has a length of 4 MHz, a suggestion for the length of each guard band at the beginning and the end of each signalling pattern would be 343 frequency carriers (which is the number of not used carriers in the data patterns at the beginning and end of each frame in each 4nk mode). The resulting number for usable carriers in each signalling pattern would be 3584/2 - 2x343 = 1106 carriers. It has to be understood, however, that these numbers are only used as examples and are not meant to be limiting in any sense. Hereby, the length of each of the guard bands comprised in the signalling patterns could be at least the length of the carriers which are not received in the receiving apparatus due to the filter characteristics as described in relation to Fig. 6, so that the length of the signalling data in each signalling pattern is equal to (or may be smaller than) the effective receiver bandwidth. It should be noted that if additional signalling patterns 31 b are present, they will have identical guard bands as the signalling patterns 31a.
Additionally or alternatively, each data pattern could comprise a guard band with unused carriers at the beginning and the end of each pattern. Alternatively, in some applications only the respective first data patterns in each frame in the frequency direction, in the example of Figures 10 and 13 the data patterns 32, 32', 32", 32"', 32"" could comprise a guard band only at the beginning of the data pattern, and the last data patterns in each frame in the frequency direction, in the example of Figures 4 and 7 the data patterns 37, 37', 37", 37"', 37"" could comprise a guard band at the end of the data pattern. Hereby, the length of the guard bands of the data patterns could for example be the same as the length of the guard bands of the signalling patterns if the signalling patterns comprise guard bands.

As stated above the signalling data comprised in the signalling patterns 31, 31a and or 31b (or other signalling patterns according to the present invention) comprise the physical layer information, which enables a receiving apparatus 63 according to the present invention to obtain knowledge about the frame structure and to receive and decode the wanted data patterns. As a non limiting example, the signalling data could comprise parameters such as the overall or entire transmission bandwidth, the location of the respective signalling pattern within the frame, the guard band length for the signalling patterns, the guard band length for the data patterns, the number of frames which build a super frame, the number of the present frame within a super frame, the number of data patterns in the frequency dimension of the overall frame bandwidth, the number of additional data patterns in the time dimension of a frame and/or individual signalling data for each data pattern in each frame. Hereby, the location of the respective signalling pattern within a frame can e.g. indicate the position of the signalling pattern in relation to the segmentation of the overall bandwidth. For example, in the case of Fig. 4, the signalling data comprise indication if the signalling pattern is located in the first segment (e.g. the first 8 MHz segment), or the second segment etc.. In case of the signalling patterns having half the length of the bandwidth segmentation, as e.g. explained in relation to Fig. 7, each pair of adjacent signalling patterns then has the same location information. In any case, the receiving apparatus will be able to tune to the wanted frequency band in the succeeding frame using this location information. The individual signalling data are a separate block of data individually provided for each data pattern present in the frame and may comprise parameters such as the first frequency carrier of the data pattern, the number of frequency carriers allocated to the data pattern, the modulation used for the data pattern, the error protection code used for the data pattern, the usage of a time interleaver for the data pattern, the number of frequency notches (frequency carriers which are not used for data transmission in data pattern) in the data pattern, the position of the frequency notches and/or the width of the frequency notches. The signalling mapping means 55 of the transmitting apparatus 54 is adapted to map the corresponding signalling data on the frequency carriers of each signalling pattern. The evaluation means 73 of the receiving apparatus 63 is adapted to evaluate the received signalling data and to use or forward the information comprised in the signalling data for further processing within the receiving apparatus 63.
In case that the signalling data comprise the mentioned individual signalling information for each data pattern present in a frame, the structure of the signalling patterns support a maximum limited number of data patterns in the frequency direction per frame in order to restrict the size of each signalling pattern to a maximum size. Thus, although the number of data patterns in the frequency direction of each frame could be dynamically and flexible changed, this would then be true only within a certain maximum number of data patterns. The additional data patterns in the time direction of each frame are respectively aligned with the preceding data patterns, as explained above. Thus, each additional succeeding data pattern has the same position, length, modulation etc. as the preceding data pattern so that the signalling data for the preceding data pattern are also valid for the succeeding data pattern. Hereby, the number of additional data patterns in the time direction of each frame could be fixed or flexible and this information could also be comprised in the signalling data. Similarly, the structure of the signalling patterns could support only a maximum limited number of frequency notches in each data pattern.

Alternatively or additionally, in order to overcome the problem that parts of the signalling patterns 31 may not be receivable in the receiving apparatus 63, the transmitting apparatus 54 could optionally comprise an error coding means 56 adapted to add some kind of error coding, redundancy, such as repetition coding, cyclic redundancy coding, or the like to the signalling data which are mapped onto the frequency carriers of a signalling pattern by the signalling mapping means 55. The additional error coding would enable the transmitting apparatus 54 to use signalling patterns 31 in the same length as the training patterns 30, as shown in Fig. 4 since the receiving apparatus 63 is able, for example, by means of the reconstruction means 71, to perform some kind of error detection and/or correction in order to reconstruct the original signalling pattern.

For the mentioned example of the signalling patterns having a length of 4 MHz and are aligned to segments of 8 MHz in an OFDM system, in the following a specific (non-limiting) example of a signalling structure is described.
For an OFDM symbol duration of 448µs, each 4MHz block is built by 1792 OFDM subcarriers. If a frequency domain pilot is used on every 7^{th} OFDM carrier within the signalling symbols 1536 OFDM carriers remain for the transmission of the L1 signalling data within each signalling OFDM symbol.
These OFDM carriers may be e.g. modulated by 16QAM, resulting in gross 6144 transmittable bits within the L1 signalling. Part of the transmittable bits have to be used for error correcting purposes, e.g. for a LDPC or Reed Solomon code. The remaining net bits are then used for the signalling, e.g. as described in the table below.

| | | |
|---|---|---|
| GI Length | | |
| Frame number | | |
| Total bandwidth | | |
| Total number of data slices | | |
| L1 sub-signalling table number | | |
| Number of sub-tabled data slices | | |
| *Loop over data slices* { | | |
| | | Data slice number |
| | | Start subcarrier frequency |
| | | Number of subcarriers per slice |
| | Time Interleaver depth | |
| | PSI/SI reprocessing | |
| | Number of notches | |
| | *Loop over notches* { | |
| | | Start of notch relative to start of slice |
| | | Notch width |
| | } *End notch loop* | |
| } *End data slice loop* | | |
| Reserved bits | | |
| CRC 32 | | |

In the following, the parameters of the signalling data mentioned in the above table are described in more detail:
GI Length:
   Defines the length of used Guard Interval

Frame Number:
Counter which is increased every frame, i.e. each signalling symbol
Total bandwidth:
   The complete transmission bandwidth of the used channel
Total number of data slices:
   This parameter signals the total number of data slices, i.e. data patterns, in the used channel
L 1 sub-signalling table number:
   Number of the sub-signalling table within the signalling data
Number of sub-tabled data slices:
   Number of data slices that are signalized within this L1 signalling table
Data slice number:
   Number of the current data slice
Start subcarrier frequency:
   Start frequency of the data slice
Number of subcarriers per slice:
   Number of subcarriers per data slice
Time interleaver depth:
   Time interleaving depth within the current data slice
PSI/SI reprocessing:
   Signalizes, whether PSI/SI reprocessing has been performed in the transmitter for the current data slice
Number of notches:
   Number of notches within the current data slice
Start of notch relative to start of slice:
   Start position of the notch within the data slice with respect to the start frequency of the data slice
Notch width:
   Width of the notch
Reserved bits:
   Reserved bits for future use
CRC_32:
   32 bit CRC coding for the L1 signalling block

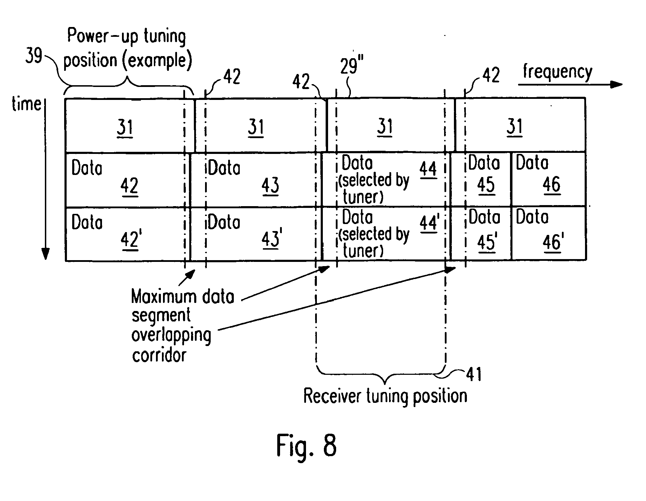

In order to ensure an even better reception of the signalling patterns in the receiving apparatus 63, the present invention further suggests to optimize the tuning position of the receiving apparatus 63. In the examples shown in Fig. 4 and 7, the receiver is tuned to a part 38 of the transmission bandwidth by centering the part 38 around the frequency bandwidth of the data patterns to be received. Alternatively, the receiving apparatus 63 could be tuned so that the reception of the signalling pattern 31 is optimized by placing the part 38 so that a maximum part of a signalling pattern 31 is received while the wanted data pattern is still fully received. Alternatively, the present invention suggests that the length of the respective data patterns should not be different from the length of the respective signalling patterns 31 by more than a certain percentage for example 10%. An example for this solution can be found in Fig. 8. The borders between the data patterns 42, 43, 44 and 45 are (in the frequency direction) not deviating from the borders between the signalling patterns 31 by more than a certain percentage, such as (but not limited to) 10%. This small percentage can then be corrected by the above-mentioned additional error coding in the signalling patterns 31.

Fig. 13 shows a time domain representation of an example of frame 47 according to the present invention. In the transmitting apparatus 54, after the frame pattern or structure was generated in the frame forming means 59, the frequency domain frame pattern is transformed into the time domain by a frequency to time transforming means 60. An example of a resulting time domain frame is now shown in Fig. 13 and comprises a guard interval 49, a signalling symbol 50, a further guard interval 51 and a number of data symbols 52, which are respectively separated by guard intervals 53.

While the situation that only a single signalling symbol is present in the time domain corresponds to the example shown in Fig. 4, where only a single time slot with signalling patterns is present in the frequency domain frame structure, the example of Fig. 7 with two time slots with signalling patterns 31a and 31b, respectively, would lead to the presence of two signalling patterns in the time domain, which are eventually separated by a guard interval. The guard intervals could e.g. be cyclic extensions of the useful parts of the respective symbols. In the example of an OFDM system, the signalling symbols and the data symbols, including their eventually provided guard bands, could respectively have the length of one OFDM symbol. The time domain frames are then forwarded to a transmitting means 61 which processes the time domain signal depending on the used multi-carrier system, for example by up-converting the signal to the wanted transmission frequency. The transmission signals are then transmitted via a transmitting interface 62, which can be a wired interface or a wireless interface, such as an antenna or the like.

Fig. 13 further shows that a respective number of frames could be combined to super frames. The number of frames per super frame, i.e. the length of each super frame in the time direction, could be fixed or could vary. Hereby, there might be a maximum length up to which the super frames could be set dynamically. Further, it might be advantageous if the signalling data in the signalling patterns for each frame in a super frame are the same and if changes in the signalling data only occur from super frame to super frame. In other words, the modulation, coding, number of data patterns etc. would be the same in each frame of a super frame, but could then be different in the succeeding super frame. For example, the length of the super frames in broadcast systems could be longer since the signalling data might not change as often, and in interactive systems the super frame length could be shorter since an optimization of the transmission and reception parameters could be done on the basis of feedback from the receiver to the transmitter.

The elements and functionalities of the transmitting apparatus 54, a block diagram of which is shown in Fig. 14, have been explained before. It has to be understood, that an actual implementation of a transmitting apparatus 54 will contain additional elements and functionalities necessary for the actual operation of the transmitting apparatus in the respective system. In Fig. 14, only the elements and means necessary for the explanation and understanding of the present invention are shown. The same is true for the rccciving apparatus 63, a block diagram of which is shown in Fig. 15. Fig. 15 only shows elements and functionalities necessary for the understanding of the present invention. Additional elements will be necessary for an actual operation of the receiving apparatus 63. It has to be further understood that the elements and functionalities of the transmitting apparatus 54 as well as the receiving apparatus 63 can be implemented in any kind of device, apparatus, system and so forth adapted to perform the functionalities described and claimed by the present invention.

The present invention is further directed to a frame structure (and a correspondingly adapted transmitting and receiving apparatus and method as described above), which, as an alternative to the above described embodiments, does have a number (two or more) data patterns in which at least one data pattern has a length which is different from the length of the other data pattern(s). This structure of data patterns with a variable length can be combined either with a sequence of signalling patterns with identical lengths and (identical or almost identical) contents as described above, or with a sequence of signalling patterns in which at least one signalling pattern has a length and/or a content different from the other signalling patterns, i.e. a variable signalling pattern length. In both cases, the receiving apparatus 63 will need some information about the varying data pattern length, which could be transmitted by means of a separate signalling data channel or by means of signalling data comprised in signalling data patterns comprised in the frame structure as described above. In the later case, it might be a possible implementation if the first signalling patterns in each frame always have the same length so that the receiving apparatus can always obtain the information about the varying data patterns by receiving the first signalling patterns in every or the necessary frames. Of course, other implementations might be possible. Otherwise, the rest of the above description in relation to the data patterns and the signalling patterns as well as the possible implementations in the transmitting apparatus 54 and the receiving apparatus 63 is still applicable.

## Claims

1. Transmitting apparatus (54) for transmitting signals in a multi carrier system on the basis of a frame structure, each frame comprising at least two signalling patterns adjacent to each other in the frequency direction and data patterns following the at least two signalling patterns in the time direction in the time slot immediately succeeding the time slot in which the at least two signalling patterns are located, wherein each of the data patterns succeeding the at least two signalling patterns is respectively followed by further data patterns in succeeding time slots in the time direction, wherein all data patterns following each other in the time direction have the same frequency direction structure, each of the at least two signalling patterns and the data patterns comprising a plurality of frequency carriers,
said transmitting apparatus comprising
signalling mapping means (55) adapted to map signalling data and pilot signals on frequency carriers of each of said at least two signalling patterns in a frame, each signalling pattern having the same length, wherein all signalling patterns in a frame comprise an identical signalling data,
data mapping means (58, 58', 58") adapted to map data on frequency carriers of said data patterns in a frame,
transforming means (60) adapted to transform said signalling patterns and said data patterns from the frequency domain into the time domain in order to generate a time domain transmission signal, and
transmitting means (61) adapted to transmit said time domain transmission signal.

2. Transmitting apparatus (54) according to claim 1,
wherein said pilot signals mapped onto frequency carriers of said at least two signalling patterns in a frame form a pilot signal sequence.

3. Transmitting apparatus (54) according to claim 1,
wherein said pilot signals in each one of said at least two signalling patterns form a pilot signal sequence.

4. Transmitting apparatus (54) according to claim 1, 2 or 3,
wherein said pilot signal sequence is a pseudo random binary sequence.

5. Transmitting apparatus (54) according to one of the claims 1 to 4,
wherein the signalling mapping means (55) is adapted to map said pilot signals on frequency carriers of said at least two signalling patterns with a differential modulation scheme.

6. Transmitting apparatus (54) according to one of the claims 1 to 5,
wherein the signalling mapping means (55) is adapted to map a pilot signal onto every m-th frequency carrier of said at least two signalling patterns, m being an integer> 1.

7. Transmitting apparatus (54) according to one of the claims 1 to 6,
wherein each of said at least two signalling patterns comprises at least one pilot band and said pilot signals are mapped onto frequency carriers of said at least one pilot band.

8. Transmitting method for transmitting signals in a multi carrier system on the basis of a frame structure, each frame comprising at least two signalling patterns adjacent to each other in the frequency direction and data patterns following the at least two signalling patterns in the time direction in the time slot immediately succeeding the time slot in which the at least two signalling patterns are located, wherein each of the data patterns succeeding the at least two signalling patterns is respectively followed by further data patterns in succeeding time slots in the time direction, wherein all data patterns following each other in the time direction have the same frequency direction structure, each of the at least two signalling patterns and the data patterns comprising a plurality of frequency carriers,
comprising the steps of
mapping signalling data and pilot signals on frequency carriers of each of said at least two signalling patterns in a frame, each signalling pattern having the same length, wherein all signalling patterns in a frame comprise identical signalling data,
mapping data on frequency carriers of said data patterns in a frame, transforming said signalling patterns and said data patterns from the frequency domain into the time domain in order to generate a time domain transmission signal, and
transmitting said time domain transmission signal.

9. Transmitting method according to claim 8,
wherein said pilot signals mapped onto frequency carriers of said at least two signalling patterns in a frame form a pilot signal sequence.

10. Transmitting method according to claim 8,
wherein said pilot signals in each one of said at least two signalling patterns form a pilot signal sequence.

11. Transmitting method according to claim 8, 9 or 10,
wherein said pilot signal sequence is a pseudo random binary sequence.

12. Transmitting method according to one of the claims 8 to 11,
wherein said pilot signals are mapped on frequency carriers of said at least two signalling patterns with a differential modulation scheme.

13. Transmitting method according to one of the claims 8 to 12,
wherein a pilot signal is mapped onto every m-th frequency carrier of said at least two signalling patterns, m being an integer > 1.

14. Transmitting method according to one of the claims 8 to 13,
wherein each of said at least two signalling patterns comprises at least one pilot band and said pilot signals are mapped onto frequency carriers of said at least one pilot band.

15. Frame pattern for a multi carrier system, comprising at least two signalling patterns adjacent to each other in the frequency direction and data patterns following the at least two signalling patterns in the time direction in the time slot immediately succeeding the time slot in which the at least two signalling patterns are located, wherein each of the data patterns succeeding the at least two signalling patterns is respectively followed by further data patterns in succeeding time slots in the time direction, wherein all data patterns following each other in the time direction have the same frequency direction structure, each of the at least two signalling patterns and the data patterns comprising a plurality of frequency carriers, wherein signalling data and pilot signals are mapped on frequency carriers of each of said at least two signalling patterns in the frame, each signalling pattern having the same length, wherein all signalling patterns in a frame comprise identical signalling data,
and wherein data are mapped on frequency carriers of said data patterns in the frame.

16. Frame pattern according to claim 15,
wherein said pilot signals mapped onto frequency carriers of said at least two signalling patterns in a frame form a pilot signal sequence.

17. Frame pattern according to claim 15,
wherein said pilot signals in each one of said at least two signalling patterns form a pilot signal sequence.

18. Frame pattern according to claim 15, 16 or 17,
wherein said pilot signal sequence is a pseudo random binary sequence.

19. Frame pattern according to one of the claims 15 to 18,
wherein said pilot signals are mapped on frequency carriers of said at least two signalling patterns with a differential modulation scheme.

20. Frame pattern according to one of the claims 15 to 19,
wherein a pilot signal is mapped onto every m-th frequency carrier of said at least two signalling patterns, m being an integer > 1.

21. Frame pattern according to one of the claims 15 to 20,
wherein each of said at least two signalling patterns comprises at least one pilot band and said pilot signals are mapped onto frequency carriers of said at least one pilot band.

## Patentansprüche

1. Übertragungsvorrichtung (54) zum Übertragen von Signalen in einem Mehrträgersystem auf der Basis einer Rahmenstruktur, wobei jeder Rahmen mindestens zwei Signalisierungsmuster bei einander in der Frequenzrichtung und den mindestens zwei Signalisierungsmustern folgende Datenmuster in der Zeitrichtung in dem Zeitschlitz unmittelbar hinter dem Zeitschlitz, in dem sich die mindestens zwei Signalisierungsmuster befinden, umfasst, wobei auf jedes der auf die mindestens zwei Signalisierungsmuster folgenden Datenmuster jeweils weitere Datenmuster in aufeinanderfolgenden Zeitschlitzen in der Zeitrichtung folgen, wobei alle einander in der Zeitrichtung folgenden Datenmuster die gleiche Frequenzrichtungsstruktur aufweisen, wobei jedes der mindestens zwei Signalisierungsmuster und der Datenmuster mehrere Frequenzträger umfasst,
wobei die Übertragungsvorrichtung Folgendes umfasst:
Signalisierungsabbildungsmittel (55), ausgelegt zum Abbilden von Signalisierungsdaten und Pilotsignalen auf Frequenzträger jedes der mindestens zwei Signalisierungsmuster in einem Rahmen, wobei jedes Signalisierungsmuster die gleiche Länge aufweist, wobei alle Signalisierungsmuster in einem Rahmen identische Signalisierungsdaten umfassen,
Datenabbildungsmittel (58, 58', 58''), ausgelegt zum Abbilden von Daten auf Frequenzträger der Datenmuster in einem Rahmen,
Transformierungsmittel (60), ausgelegt zum Transformieren der Signalisierungsmuster und der Datenmuster aus dem Frequenzbereich in den Zeitbereich, um ein Zeitbereichsübertragungssignal zu generieren, und
Übertragungsmittel (61), ausgelegt zum Übertragen des Zeitbereichsübertragungssignals.

2. Übertragungsvorrichtung (54) nach Anspruch 1, wobei die auf Frequenzträger der mindestens zwei Signalisierungsmuster in einem Rahmen abgebildeten Pilotsignale eine Pilotsignalsequenz bilden.

3. Übertragungsvorrichtung (54) nach Anspruch 1, wobei die Pilotsignale in jedem der mindestens zwei Signalisierungsmuster eine Pilotsignalsequenz bilden.

4. Übertragungsvorrichtung (54) nach Anspruch 1, 2 oder 3,
wobei die Pilotsignalsequenz eine pseudozufällige binäre Sequenz ist.

5. Übertragungsvorrichtung (54) nach einem der Ansprüche 1 bis 4,
wobei das Signalisierungsabbildungsmittel (55) ausgelegt ist zum Abbilden der Pilotsignale auf Frequenzträger der mindestens zwei Signalisierungsmuster mit einem Differenzmodulationsverfahren.

6. Übertragungsvorrichtung (54) nach einem der Ansprüche 1 bis 5,
wobei das Signalisierungsabbildungsmittel (55) ausgelegt ist zum Abbilden eines Pilotsignals auf jeden m-ten Frequenzträger der mindestens zwei Signalisierungsmuster, wobei m eine ganze Zahl > 1 ist.

7. Übertragungsvorrichtung (54) nach einem der Ansprüche 1 bis 6,
wobei jedes der mindestens zwei Signalisierungsmuster mindestens ein Pilotband umfasst und die Pilotsignale auf Frequenzträger des mindestens einen Pilotbands abgebildet werden.

8. Übertragungsverfahren zum Übertragen von Signalen in einem Mehrträgersystem auf der Basis einer Rahmenstruktur, wobei jeder Rahmen mindestens zwei Signalisierungsmuster bei einander in der Frequenzrichtung und den mindestens zwei Signalisierungsmustern folgende Datenmuster in der Zeitrichtung in dem Zeitschlitz unmittelbar hinter dem Zeitschlitz, in dem sich die mindestens zwei Signalisierungsmuster befinden, umfasst, wobei auf jedes der auf die mindestens zwei Signalisierungsmuster folgenden Datenmuster jeweils weitere Datenmuster in aufeinanderfolgenden Zeitschlitzen in der Zeitrichtung folgen, wobei alle einander in der Zeitrichtung folgende Datenmuster die gleiche Frequenzrichtungsstruktur aufweisen, wobei jedes der mindestens zwei Signalisierungsmuster und der Datenmuster mehrere Frequenzträger umfasst, umfassend die folgenden Schritte:
Abbilden von Signalisierungsdaten und Pilotsignalen auf Frequenzträger jedes der mindestens zwei Signalisierungsmuster in einem Rahmen, wobei jedes Signalisierungsmuster die gleiche Länge aufweist, wobei alle Signalisierungsmuster in einem Rahmen identische Signalisierungsdaten umfassen,
Abbilden von Daten auf Frequenzträger der Datenmuster in einem Rahmen,
Transformieren der Signalisierungsmuster und der Datenmuster aus dem Frequenzbereich in den Zeitbereich, um ein Zeitbereichsübertragungssignal zu generieren, und
Übertragen des Zeitbereichsübertragungssignals.

9. Übertragungsverfahren nach Anspruch 8,
wobei die auf Frequenzträger der mindestens zwei Signalisierungsmuster in einem Rahmen abgebildeten Pilotsignale eine Pilotsignalsequenz bilden.

10. Übertragungsverfahren nach Anspruch 8,
wobei die Pilotsignale in jedem der mindestens zwei Signalisierungsmuster eine Pilotsignalsequenz bilden.

11. Übertragungsverfahren nach Anspruch 8, 9 oder 10, wobei die Pilotsignalsequenz eine pseudozufällige binäre Sequenz ist.

12. Übertragungsverfahren nach einem der Ansprüche 8 bis 11,
wobei die Pilotsignale auf Frequenzträger der mindestens zwei Signalisierungsmuster mit einem Differenzmodulationsverfahren abgebildet werden.

13. Übertragungsverfahren nach einem der Ansprüche 8 bis 12,
wobei ein Pilotsignal auf jeden m-ten Frequenzträger der mindestens zwei Signalisierungsmuster abgebildet wird, wobei m eine ganz Zahl >1 ist.

14. Übertragungsverfahren nach einem der Ansprüche 8 bis 13,
wobei jedes der mindestens zwei Signalisierungsmuster mindestens ein Pilotband umfasst und die Pilotsignale auf Frequenzträger des mindestens einen Pilotbands abgebildet werden.

15. Rahmenmuster für ein Mehrträgersystem, umfassend mindestens zwei Signalisierungsmuster bei einander in der Frequenzrichtung und den mindestens zwei Signalisierungsmustern folgende Datenmuster in der Zeitrichtung in dem Zeitschlitz unmittelbar hinter dem Zeitschlitz, in dem sich die mindestens zwei Signalisierungsmuster befinden, wobei auf jedes der auf die mindestens zwei Signalisierungsmuster folgenden Datenmuster jeweils weitere Datenmuster in aufeinanderfolgenden Zeitschlitzen in der Zeitrichtung folgen, wobei alle einander in der Zeitrichtung folgenden Datenmuster die gleiche Frequenzrichtungsstruktur aufweisen, wobei jedes der mindestens zwei Signalisierungsmuster und der Datenmuster mehrere Frequenzträger umfassen, wobei Signalisierungsdaten und Pilotsignale auf Frequenzträger jedes der mindestens zwei Signalisierungsmuster in dem Rahmen abgebildet werden, wobei jedes Signalisierungsmuster die gleiche Länge aufweist, wobei alle Signalisierungsmuster in einem Rahmen identische Signalisierungsdaten umfassen,
und wobei Daten auf Frequenzträger der Datenmuster in dem Rahmen abgebildet werden.

16. Rahmenmuster nach Anspruch 15,
wobei die auf Frequenzträger der mindestens zwei Signalisierungsmuster in einem Rahmen abgebildeten Pilotsignale eine Pilotsignalsequenz bilden.

17. Rahmenmuster nach Anspruch 15,
wobei die Pilotsignale in jedem der mindestens zwei Signalisierungsmuster eine Pilotsignalsequenz bilden.

18. Rahmenmuster nach Anspruch 15, 16 oder 17,
wobei die Pilotsignalsequenz eine pseudozufällige binäre Sequenz ist.

19. Rahmenmuster nach einem der Ansprüche 15 bis 18,
wobei die Pilotsignale auf Frequenzträger der mindestens zwei Signalisierungsmuster mit einem Differenzmodulationsverfahren abgebildet werden.

20. Rahmenmuster nach einem der Ansprüche 15 bis 19,
wobei ein Pilotsignal auf jeden m-ten Frequenzträger der mindestens zwei Signalisierungsmuster abgebildet wird, wobei m eine ganz Zahl >1 ist.

21. Rahmenmuster nach einem der Ansprüche 15 bis 20,
wobei jedes der mindestens zwei Signalisierungsmuster mindestens ein Pilotband umfasst und die Pilotsignale auf Frequenzträger des mindestens einen Pilotbands abgebildet werden.

## Revendications

1. Appareil de transmission (54) destiné à transmettre des signaux dans un système multi-porteuses sur la base d'une structure de trame, chaque trame comprenant au moins deux configurations de signalisation adjacentes l'une à l'autre dans la direction des fréquences et des configurations de données suivant les au moins deux configurations de signalisation dans la direction du temps dans le créneau temporel faisant immédiatement suite au créneau temporel dans lequel se trouvent les au moins deux configurations de signalisation, dans lequel chacune des configurations de données faisant suite aux au moins deux configurations de signalisation est respectivement suivie d'autres configurations de données dans des créneaux temporels suivants dans la direction du temps, dans lequel toutes les configurations de données se suivant mutuellement dans la direction du temps ont la même structure dans la direction des fréquences, chacune des au moins deux configurations de signalisation et des configurations de données comprenant une pluralité de porteuses de fréquences,
ledit appareil de transmission comprenant
un moyen de mise en correspondance de signalisations (55) apte à mettre en correspondance des données de signalisation et des signaux pilotes avec des porteuses de fréquences de chacune desdites au moins deux configurations de signalisation dans une trame, chaque configuration de signalisation ayant la même longueur, dans lequel toutes les configurations de signalisation d'une trame comprennent des données de signalisation identiques,
un moyen de mise en correspondance de données (58, 58', 58") apte à mettre en correspondance des données avec des porteuses de fréquences desdites configurations de données dans une trame,
un moyen de transformation (60) apte à transformer lesdites configurations de signalisation et lesdites configurations de données du domaine des fréquences au domaine temporel afin de générer un signal de transmission dans le domaine temporel, et
un moyen de transmission (61) apte à transmettre ledit signal de transmission dans le domaine temporel.

2. Appareil de transmission (54) selon la revendication 1, dans lequel lesdits signaux pilotes mis en correspondance avec des porteuses de fréquences desdites au moins deux configurations de signalisation dans une trame forment une séquence de signaux pilotes.

3. Appareil de transmission (54) selon la revendication 1, dans lequel lesdits signaux pilotes de chacune desdites au moins deux configurations de signalisation forment une séquence de signaux pilotes.

4. Appareil de transmission (54) selon la revendication 1, 2 ou 3, dans lequel ladite séquence de signaux pilotes est une séquence binaire pseudo-aléatoire.

5. Appareil de transmission (54) selon l'une des revendications 1 à 4, dans lequel le moyen de mise en correspondance de signalisations (55) est apte à mettre en correspondance lesdits signaux pilotes avec des porteuses de fréquences desdites au moins deux configurations de signalisation par une technique de modulation différentielle.

6. Appareil de transmission (54) selon l'une des revendications 1 à 5, dans lequel le moyen de mise en correspondance de signalisations (55) est apte à mettre en correspondance un signal pilote avec chaque m-ième porteuse de fréquence desdites au moins deux configurations de signalisation, m étant un entier > 1.

7. Appareil de transmission (54) selon l'une des revendications 1 à 6, dans lequel chacune desdites au moins deux configurations de signalisation comprend au moins une bande pilote et lesdits signaux pilotes sont mis en correspondance avec des porteuses de fréquences de ladite au moins une bande pilote.

8. Procédé de transmission destiné à transmettre des signaux dans un système multi-porteuses sur la base d'une structure de trame, chaque trame comprenant au moins deux configurations de signalisation adjacentes l'une à l'autre dans la direction des fréquences et des configurations de données suivant les au moins deux configurations de signalisation dans la direction du temps dans le créneau temporel faisant immédiatement suite au créneau temporel dans lequel se trouvent les au moins deux configurations de signalisation, dans lequel chacune des configurations de données faisant suite aux au moins deux configurations de signalisation est respectivement suivie d'autres configurations de données dans des créneaux temporels suivants dans la direction du temps, dans lequel toutes les configurations de données se suivant mutuellement dans la direction du temps ont la même structure dans la direction des fréquences, chacune des au moins deux configurations de signalisation et des configurations de données comprenant une pluralité de porteuses de fréquences,
comprenant les étapes consistant à :
mettre en correspondance des données de signalisation et des signaux pilotes avec des porteuses de fréquences de chacune desdites au moins deux configurations de signalisation dans une trame, chaque configuration de signalisation ayant la même longueur, dans lequel toutes les configurations de signalisation d'une trame comprennent des données de signalisation identiques,
mettre en correspondance des données avec des porteuses de fréquences desdites configurations de données dans une trame,
transformer lesdites configurations de signalisation et lesdites configurations de données du domaine des fréquences au domaine temporel afin de générer un signal de transmission dans le domaine temporel, et
transmettre ledit signal de transmission dans le domaine temporel.

9. Procédé de transmission selon la revendication 8, dans lequel lesdits signaux pilotes mis en correspondance avec des porteuses de fréquences desdites au moins deux configurations de signalisation dans une trame forment une séquence de signaux pilotes.

10. Procédé de transmission selon la revendication 8, dans lequel lesdits signaux pilotes de chacune desdites au moins deux configurations de signalisation forment une séquence de signaux pilotes.

11. Procédé de transmission selon la revendication 8, 9 ou 10, dans lequel ladite séquence de signaux pilotes est une séquence binaire pseudo-aléatoire.

12. Procédé de transmission selon l'une des revendications 8 à 11, dans lequel lesdits signaux pilotes sont mis en correspondance avec des porteuses de fréquences desdites au moins deux configurations de signalisation par une technique de modulation différentielle.

13. Procédé de transmission selon l'une des revendications 8 à 12, dans lequel un signal pilote est mis en correspondance avec chaque m-ième porteuse de fréquence desdites au moins deux configurations de signalisation, m étant un entier > 1.

14. Procédé de transmission selon l'une des revendications 8 à 13, dans lequel chacune desdites au moins deux configurations de signalisation comprend au moins une bande pilote et lesdits signaux pilotes sont mis en correspondance avec des porteuses de fréquences de ladite au moins une bande pilote.

15. Configuration de trame destinée à un système multi-porteuses comprenant au moins deux configurations de signalisation adjacentes l'une à l'autre dans la direction des fréquences et des configurations de données suivant les au moins deux configurations de signalisation dans la direction du temps dans le créneau temporel faisant immédiatement suite au créneau temporel dans lequel se trouvent les au moins deux configurations de signalisation, dans laquelle chacune des configurations de données faisant suite aux au moins deux configurations de signalisation est respectivement suivie d'autres configurations de données dans des créneaux temporels suivants dans la direction du temps, dans laquelle toutes les configurations de données se suivant mutuellement dans la direction du temps ont la même structure dans la direction des fréquences, chacune des au moins deux configurations de signalisation et des configurations de données comprenant une pluralité de porteuses de fréquences, dans laquelle des données de signalisation et des signaux pilotes sont mis en correspondance avec des fréquences porteuses de chacune desdites au moins deux configurations de signalisation dans la trame, chaque configuration de signalisation ayant la même longueur, dans laquelle toutes les configurations de signalisation d'une trame comprennent des données de signalisation identiques,
et dans laquelle des données sont mises en correspondance avec des porteuses de fréquences desdites configurations de données dans la trame.

16. Configuration de trame selon la revendication 15, dans laquelle lesdits signaux pilotes mis en correspondance avec des porteuses de fréquences desdites au moins deux configurations de signalisation d'une trame forment une séquence de signaux pilotes.

17. Configuration de trame selon la revendication 15, dans laquelle lesdits signaux pilotes de chacune desdites au moins deux configurations de signalisation forment une séquence de signaux pilotes.

18. Configuration de trame selon la revendication 15, 16 ou 17, dans laquelle ladite séquence de signaux pilotes est une séquence binaire pseudo-aléatoire.

19. Configuration de trame selon l'une des revendications 15 à 18, dans laquelle lesdits signaux pilotes sont mis en correspondance avec des porteuses de fréquences desdites au moins deux configurations de signalisation par une technique de modulation différentielle.

20. Configuration de trame selon l'une des revendications 15 à 19, dans laquelle un signal pilote est mis en correspondance avec chaque m-ième porteuse de fréquence desdites au moins deux configurations de signalisation, m étant un entier > 1.

21. Configuration de trame selon l'une des revendications 15 à 20, dans laquelle chacune desdites au moins deux configurations de signalisation comprend au moins une bande pilote et lesdits signaux pilotes sont mis en correspondance avec des porteuses de fréquences de ladite au moins une bande pilote.
